# EUROPÄISCHE PATENTSCHRIFT

(11) **EP 1 036 258 B1**
(45) Veröffentlichungstag und Bekanntmachung des Hinweises auf die Patenterteilung: **03.07.2002**
(21) Anmeldenummer: 98955507.3
(22) Anmeldetag: 21.10.1998
(51) Int. Cl.: F01N 3/28

(54) **ABGASKATALYSATOR, INSBESONDERE FÜR KRAFTFAHRZEUGE UND VERFAHREN ZU SEINER HERSTELLUNG**
CATALYTIC CONVERTER, ESPECIALLY FOR MOTOR VEHICLES, AND METHOD FOR THE PRODUCTION THEREOF
POT CATALYTIQUE DESTINE NOTAMMENT A DES VEHICULES AUTOMOBILES ET SON PROCEDE DE PRODUCTION

(30) Priorität: 03.12.1997 DE 19753609
(43) Veröffentlichungstag der Anmeldung: 20.09.2000
(73) Patentinhaber: Faurecia Abgastechnik GmbH, 90765 Fürth (DE)
(72) Erfinder: STOEPLER, Walter, D-91074 Herzogenaurach (DE); BUCKEL, Thomas, D-90489 Nürnberg (DE)
(74) Vertreter: Mörtel & Höfner
(86) Internationale Anmeldenummer: EP9806694
(87) Internationale Veröffentlichungsnummer: WO9928604

(56) Entgegenhaltungen:
- DE-A- 3 638 050
- DE-C- 19 714 851
- US-A- 3 912 459
- PATENT ABSTRACTS OF JAPAN vol. 098, no. 001, 30. Januar 1998 & JP 09 242533 A (CALSONIC CORP), 16. September 1997

## Beschreibung

Ein üblicher Abgaskatalysator, insbesondere für Kraftfahrzeuge, umfasst ein metallisches Gehäuse, in dem ein Katalysatorkörper gelagert ist. Ein keramischer Katalysatorkörper, im folgenden Monolith genannt, weist gegenüber einem metallischen eine weit geringe mechanische Stabilität auf. Außerdem sind die Wärmeausdehnungskoeffizienten des keramischen Materials und des metallischen Gehäuses sehr unterschiedlich, Die Lagerung eines Monolithen im Gehäuse erfolgt daher mit Hilfe einer Lagerungsmatte, die in einem zwischen Monolith und Gehäuse vorhandenen Spaltraum mit radialer Vorspannung einliegt. Als Lagerungsmatten werden häufig sogenannte Quellmatten verwendet, das sind Mineralfasermatten mit eingelagerten Blähglimmerpartikeln. Blähglimmer spaltet bei erhöhten Temperaturen irreversibel Wasserdampf ab, wodurch die Partikel in einen expandierten Zustand übergehen. Im expandierten Zustand der Blähglimmerpartikel übt die Matte in Radialrichtung höhere Rückstellkräfte auf die Innenfläche des Gehäuses und die Umfangsfläche des Monolithen aus, was mit einer Erhöhung der Auspresskraft verbunden ist. Unter Auspresskraft ist die Kraft zu verstehen, mit der der Monolith in Axialrichtung beaufschlagt werden muss, um ihn aus seiner Lagerung zu lösen. bzw. um ihn in Axialrichtung zu verschieben. Die Auspresskraft soll aus verständlichen Gründen möglichst hoch sein, um eine zuverlässige Lagerung des Monolithen während des Fahrzeugbetriebes zu gewährleisten.

Neben Quellmatten werden auch Lagerungsmatten eingesetzt, die keinen Blähglimmer enthalten. Solche Matten bestehen im wesentlichen nur aus Mineralfasern. Die radialen Rückstellkräfte beider Mattentypen werden dadurch erzeugt, dass die Dicke der Matte im unverbauten Zustand größer ist als das Spaltmaß des zwischen Monolith und Gehäuse vorhandenen Spaltraums. Während bei Quellmatten die Spaltvergrößerung bei den Betriebstemperaturen des Katalysators durch die Expansion der Blähglimmerpartikel ausgeglichen wird, muss bei blähglimmerfreien Mineralfasermatten die radiale Vorspannung der Lagerungsmatte so groß sein, dass auch im erweiterten Zustand des Spaltraumes der Monolith sicher gelagert wird. Um die Rückstellkräfte einer Matte mit vorgegebener Dicke zu erhöhen, wird daher in der Regel ein möglichst kleines Spaltmaß für den Spaltraum angestrebt. Bei aus zwei Halbschalen bestehenden Gehäusen wird zunächst ein aus einem oder mehreren einlagig mit einer Lagerungsmatte umwickelten Monolithen bestehendes Monolithpaket in eine Halbschale eingelegt und dann die zweite Halbschale aufgesetzt. Dabei muss die Lagerungsmatte auf eine dem gewünschten Spaltmaß entsprechende Dicke komprimiert werden. Während ein Monolith gegenüber einer radial einwirkenden isostatischen Belastung relativ unempfindlich ist, besteht bei Scherbeanspruchungen, etwa infolge tangentialer Krafteinleitung, die Gefahr dass der Monolith zerstört wird. Bei Halbschalengehäusen tritt eine solche Scherbelastung vor allem an den Rändern der Halbschalen auf. Einer Verkleinerung des Spaltmaßes sind bei solchen Katalysatoren daher relativ enge Grenzen gesetzt. Analoges trifft für Abgaskatalysatoren mit einem Wickelgehäuse zu. Bei einer dritten Katalysatorbauart besteht der den bzw. die Monolithe aufnehmende Lagerungsbereich des Gehäuses aus einem Rohrabschnitt. Bei der Herstellung solcher Abgaskatalysatoren wird das oben erwähnte Monolithpaket in einen Rohrabschnitt eingepresst. Die durch die Kompression der Lagerungsmatte hervorgerufenen Rückstellkräfte wirken dabei gleichmäßig über den Monolithumfang verteilt, also quasi isostatisch auf den Monolithen. Eine Scherbelastung tritt praktisch nicht auf. Dennoch kann bei herkömmlichen Rohrkatalysatoren der Spaltraum zur Erhöhung der Mattenrücksteilkräfte nicht in zufriedenstellendem Maße verkleinert werden. Dies liegt daran, dass das Einpressen eines Monolithpakets in einen Rohrabschnitt umso schwieriger zu bewerkstelligen ist, je enger der zur Verfügung stehende Spaltraum ist bzw. je mehr die Dicke der Lagerungsmatte das zur Verfügung stehende Spaltmaß des Spaltraumes übersteigt. In JP 09 242533 A ist ein Abgaskatalysator mit einem einen Monolithen aufnehmenden Rohrabschnitt beschrieben. Der Rohrabschnitt ist von seinem einen zu seinem anderen Ende hin kontinuierlich konisch verjüngt.

Davon ausgehend ist es die Aufgabe der Erfindung, einen Abgaskatalysator mit verbesserter Lagerung des Monolithen sowie ein Verfahren zur Herstellung eines Abgaskatalysators in Rohrbauweise vorzuschlagen.

Diese Aufgabe wird durch ein Verfahren gemäß Anspruch 1 sowie einen Abgaskatalysator nach Anspruch **9** gelöst. Wenn von einem etwa zylindrischen Rohrabschnitt oder von einem etwa zylindrischen Monolithen gesprochen wird, so sind darunter auch ovale oder polygone Rohrabschnitte und Monolithe zu verstehen. Außerdem soll unter einem Abgaskatalysator allgemein eine Vorrichtung zur Reinigung von Abgasen verstanden werden, die neben oder statt eines Monolithen auch einen Partikel- oder Rußfilter enthalten kann. Bei einem erfindungsgemäßen Verfahren wird ein Rohrabschnitt mit einer sich stufenartig verändernden Innenquerschnittsfläche in Form mehrerer Längsabschnitte bereitgestellt, wobei ein Monolithpaket von einem Rohrende her eingepresst wird, das eine größere oder die größte Innenquerschnittsfläche bzw. lichte Weite aufweist. Die Innenfläche der Längsabschnitte verläuft parallel zur Mittellängsachse des Rohrabschnitts. Sie bildet dabei einen koaxial zur Mittellängsachse des Rohrabschnittes verlaufenden Zylindermantel mit kreisförmigem, ovalem oder polygenem Umriss. Es kann z. B. ein Rohrabschnitt gewählt werden, der einen ersten Längsabschnitt mit größerer und einen sich daran anschließenden zweiten Längsabschnitt mit kleinerer Innenquerschnittsfläche aufweist. Die größere Innenquerschnittsfläche ist so gewählt, dass das Einschieben des Monolithpaketes keine Probleme bereitet, wobei aber dennoch eine Rückstellkräfte bewirkende Kompression der Lagerungsmatte erfolgt. Der sich anschließende Längsabschnitt mit kleinerer Innenquerschnittsfläche ist dagegen so gewählt, dass eine möglichst hohe Kompression der Lagerungsmatte und damit möglichst hohe Rückstellkräfte erzeugt werden. Würde dagegen ein Rohrabschnitt mit insgesamt verkleinerter Innenquerschnittsfläche verwendet werden, bestünde die Gefahr, dass die Lagerungsmatte gleich zu Beginn des Einpressvorgangs etwa am Stirnkantenbereich des Rohrabschnitts hängen bleibt und nur der Monolith weiter in den Rohrabschnitt vorgetrieben wird. Wenn jedoch am Einpressende des Rohrabschnittes eine größere Innenquerschnittsfläche und dementsprechend ein Spaltraum mit größerem Spaltmaß vorhanden ist, kann das Monolithpaket in den Rohrabschnitt eingepresst werden, ohne dass die Sollage der Lagerungsmatte relativ zum Monolithen verändert wird. Wenn das in Einpressrichtung weisende Vorderende des Monolithpakets später in den verengten Längsabschnitt des Rohrabschnittes eintritt, ist der sich davor befindliche Bereich der Lagerungsmatte durch den Rohrabschnitt schon derart stabilisiert, dass eine Sollageveränderung der Lagerungsmatte verhindert ist. Vorzugsweise wird ein derart vorkonfektionierter Rohrabschnitt so angeordnet, dass der verengte Längsabschnitt den zum Einströmtrichter weisenden Vorderbereich des Monolithen umfasst (Anspruch **10**).

Die Herstellung eines erfindungsgemäßen Abgaskatalysators kann auch so erfolgen, dass von jedem Rohrende her ein Monolithpaket in einem Rohrabschnitt eingepresst wird. In diesem Falle weisen beide Rohrenden eine größere Innenquerschnittsfläche auf als wenigstens ein dazwischen angeordneter Bereich mit verringerter Innenquerschnittsfläche (Ansprüche 2 und 11). Bei einer Ausführungsvariante sind die in Einpressrichtung aufeinander folgenden Längsabschnitte gemäß den Ansprüchen 3 und 12 nach abnehmenden Innenquerschnittsflächen angeordnet. Die Lagerungsmatte wird dabei mit fortschreitender Einpresstiefe zunehmend komprimiert, bis sie am Ende des Einpressvorgangs im Bereich des in Einpressrichtung weisenden Rohrendes ihre höchste Kompression erfährt.

Vorteilhaft ist auch ein Verfahren nach Anspruch **5** und ein Abgaskatalysator nach Anspruch **14,** wenn sich die verengten bzw. die konusförmig verjüngten Längsabschnitte nur über einen Teilumfangsbereich des Rohrabschnittes erstrecken. Im Querschnitt ovale bzw. ellipsenförmige Monolithe sind in ihren Flachbereichen, also im Bereich ihrer kleineren Ellipsenachse stärker druckbelastbar als in den seitlichen, stärker gekrümmten Bereichen ihrer längeren Ellipsenachse. Daher ist es vorteilhaft, wenn die Gesamtpresskraft so verteilt wird, dass die Flachseiten der Monolithe stärker belastet werden, als die stärker gekrümmten Seitenbereiche. Um dies zu gewährleisten, wird ein Rohrabschnitt verwendet, der nicht über seinen gesamten Umfang verengt ist sondern in seinen den jeweiligen Flachseiten des Monolithen zugeordneten Bereichen verengt ist. Der Monolith lässt sich daher insgesamt mit einer erhöhten radialen Presskraft beaufschlagen, ohne dass dabei die Gefahr eines Monolithbruches besteht. Die Verengung der genannten Umfangsbereiche kann so gewählt sein, dass nach dem Einpressen eines Monolithpaketes ein vollumfänglich gleichmäßiges Spaltmaß des Spaltraumes erreicht wird.

Eine Variation der radialen Presskraft kann allgemein auch dadurch erreicht werden, dass die Verengung von verengten bzw. verjüngten Längsabschnitten in einem Teilumfangsbereich stärker ausgeprägt ist als in einem anderen Teilumfangsbereich. Für Rohrabschnitte, bei denen sich die Verengung nur auf einen Teilumfangsbereich erstreckt, bedeutet dies, dass ein Abschnitt dieses Teilumfangsbereiches weiter in Richtung auf die Mittellängsachse des Rohrabschnittes abgesenkt ist als ein anderer Abschnitt.

Besonders vorteilhaft ist ein erfindungsgemäßer Abgaskatalysator in Verbindung mit einer Quellmatte, da solche Matten gegenüber blähglimmerpartikelfreien Mineralfasermatten wesentlich kostengünstiger sind. Bei solchen Quellmatten muss eine bestimmte Betriebstemperatur erreicht werden, damit die Expansion der Blähglimmerpartikel ausgelöst wird. Im Niederlastbereich, beispielsweise von großvolumigen Dieselmotoren oder bei Diesel- oder Otto-Motoren mit direkter Kraftstoffeinspritzung wird die Expansionstemperatur vielfach nicht erreicht. Die Folge ist, dass der Monolith allein aufgrund der anfänglichen, durch das Spaltmaß und die ursprüngliche Mattendicke bestimmten Rückstellkräfte der Quellmatte im Katalysatorgehäuse gelagert ist. Bei einer Quellmatte sind die Mineralfasern und die Blähglimmerpartikel in einem organischen Binder eingebettet. Die anfängliche Rückstellkraft einer solchen Matte wird maßgeblich vom organischen Binder bestimmt. Oberhalt etwa 160 °C erweicht der Binder und verteilt sich dabei in der porösen Struktur der Matte. Die Folge ist ein Verlust an Rückstellkraft bzw. ein Abfall der auf den Monolithen ausgeübten radialen Presskräfte. Hinzu kommt, dass der Binder bei längerer Wärmebeaufschlagung in dem genannten Temperaturbereich durch partielle Oxidation verhärtet. Dies hat einen weiteren erheblichen Rückgang der axialen Presskräfte zur Folge. Hinzu kommt, dass die beim Betrieb des Fahrzeuges auftretenden Vibrationen eine stetige Kompression der Lagerungsmatte in Radialrichtung, und aufgrund des verhärteten Binders praktisch eine bleibende Verformung bzw. Verdichtung der Matte bewirken. Dies kann soweit führen, dass die durch Motorschwingungen und Abgaspulstationen hervorgerufenen axialen Beschleunigungen den Monolithen aus seiner Verankerung lösen. Bei einem erfindungsgemäßen bzw. einem erfindungsgemäß hergestellten Abgaskatalysator ist dies aber dadurch verhindert, dass die Innenquerschnittsfläche des verengten Gehäuseabschnittes so gewählt, dass die Lagerungsmatte so stark komprimiert bzw. vorgespannt ist, dass eine zuverlässige Halterung des Monolithen auch in den genannten Niederlastbereichen bzw. bei Motoren mit nur geringer Wärmeentwicklung gewährleistet ist. Die Verringerung der Innenquerschnittsfläche kann schließlich so gewählt sein, dass Fertigungstoleranzen des Monolithen und des Rohrabschnittes, die vergrößernd auf den Spaltraum wirken, und damit die Auspresskraft unter einen betriebssicheren Sollmindestwert absenken, kompensiert werden. Die Erfindung bietet daher weiterhin den Vorteil, dass auf eine individuelle Kalibrierung der Rohrabschnitte verzichtet werden kann. Bei einer solchen Kalibrierung wird jedem Rohrabschnitt ein individueller Monolith zugeordnet, die Querschnittsfläche des Monolithen bestimmt und zur Erzielung des gewünschten Spaltmaßes der Rohrabschnitt aufgeweitet.

Die Erfindung wird nun anhand von den in den beigefügten Zeichnungen dargestellten Ausführungsbeispielen näher erläutert:

Es zeigen:
- Fig. 1: einen erfindungsgemäßen Abgaskatalysator in schematischer Darstellung, bei dem ein zwei Monolithe aufnehmender Rohrabschnitt nur einen verengten Längsabschnitt aufweist
- Fig.2: einen Abgaskatalysator mit einem zwei Monolithe aufnehmenden Rohrabschnitt, bei dem jedem Monolithen ein verengter Längsabschnitt zugeordnet ist,
- Fig.3: einen Abgaskatalysator mit einem Rohrabschnitt, bei dem ein etwa mittig angeordneter verengter Längsabschnitt von zwei Längsabschnitten mit größerer Innenquerschnittsfläche flankiert ist,
- Fig.4: einen Abgaskatalysator mit einem Rohrabschnitt, bei dem in Einpressrichtung aufeinanderfolgende Längsabschnitte nach abnehmender Innenquerschnittsfläche angeordnet sind,
- Fig.5: eine das Einpressen eines Monolithpakets in einen Rohrabschnitt zeigende schematische Darstellung,
- Fig.6: eine schematische Darstellung, die die Anfangsphase beim Einpressen eine Monolithpakets in einen Rohrabschnitt zeigt,
- Fig.7: die Draufsicht auf den Rohrabschnitt eines Abgaskatalysators, bei dem sich verengte Längsabschnitte nur über einen Teilumfangsbereich erstrecken,
- Fig.8: eine Ansicht des Rohrabschnittes nach Fig. 9 in Richtung,des Pfeiles X,
- Fig.9: eine Abbildung eines Rohrabschnittes entsprechend Fig. 9 mit einem sich über den gesamten Umfang des Rohrabschnittes erstreckenden verengten Längsabschnitt, bei dem jedoch zwei Teilumfangsbereiche stärker verengt sind als die beiden anderen.

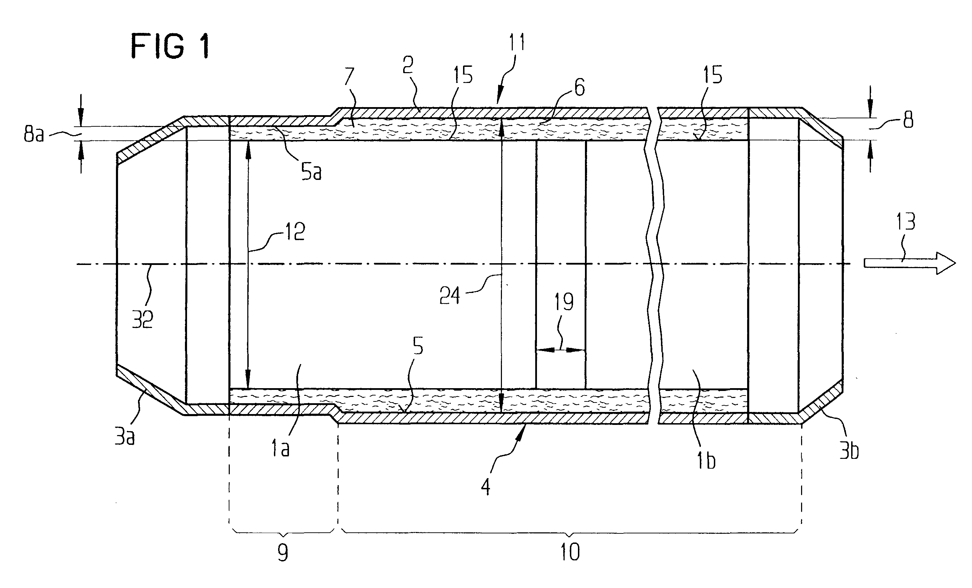

Bei dem in Fig. 1 dargestellten Abgaskatalysator ist der zwei Monolithe 1a, 1b auf nehmende Lagerbereich 11 des Gehäuses 4 von einem Rohrabschnitt 2 gebildet. An den Rohrabschnitt 2 ist an der einen Stirnseite ein Einströmtrichter 3 und an der anderen Stirnseite ein Ausströmtrichter 3b angesetzt. Das Gehäuse 4 des Abgaskatalysators setzt sich somit aus dem Rohrabschnitt 2 dem Einströmtrichter 3 und dem Ausströmtrichter 3b zusammen. Der Rohrabschnitt 2 ist kreiszylinderförmig. Er kann aber auch oval sein oder eine sonstige Umrißform haben. Zwischen der Umfangsfläche 15 der Monolithe 1 a, 1 b und der Innenseite 5 des Rohrabschnitts 2 ist ein im Querschnitt gesehen ringförmiger Spaltraum 6 angeordnet. In dem Spaltraum 6 liegt mit radialer Vorspannung eine Lagerungsmatte 7 ein. Die Vorspannung wird dadurch erreicht, daß die Dicke der Lagerungsmatte im unverbauten Zustand größer ist als das Spaltmaß 8 des Spaltraumes 6. Die Lagerungsmatte ist eine sogenannte Quellmatte, also eine Matte, die im wesentlichen aus Mineralfasern mit dazwischen eingelagerten Blähglimmerpartikein sowie dem organischen Binder besteht. Grundsätzlich können aber auch Matten ohne Blähglimmerpartikel verwendet werden. Der Rohrabschnitt ist in zwei Längsabschnitte 9, 10 unterteilt. Der Längsabschnitt 9 weist eine geringeren Durchmesser 12 bzw. eine kleinere Innenquerschnittsfläche auf als der sich in Strömungsrichtung 13 daran anschließende Längsabschnitt 10. Dementsprechend weist der Längsabschnitt 9 bei einliegendem Monolith 1a ein geringeres Spaltmaß 8a auf als der Längsabschnitt 10, Die Kompression der Lagerungsmatte 7 ist im Längsabschnitt 9 erhöht. Dementsprechend erhöht sind die von der Lagerungsmatte 7 auf die Innenseite 5 und auf die Umfangsfläche 15 des Monolithen 1a einwirkenden radialen Rückstellkräfte. Durch die erhöhte Kompression der Lagerungsmatte 7 im Längsabschnitt 9 kann auf eine in Erosionsschutz des Stirnkantenbereiches 17 der Lagerungsmatte verzichtet werden. Die Fasern der Matte sind hier so komprimiert, daß eine Erosion durch den auftreffenden Abgasstrom verhindert oder zumindest verringert ist. Die einem Längsabschnitt 5, 10 zugeordnete Innenfläche 5a des Rohrabschnittes verläuft parallel zu dessen Mittellängsachse 32 bzw. bildet einen koaxial zur Mittellängsachse 32 des Rohrabschnittes verlaufenden Zylindermantel.

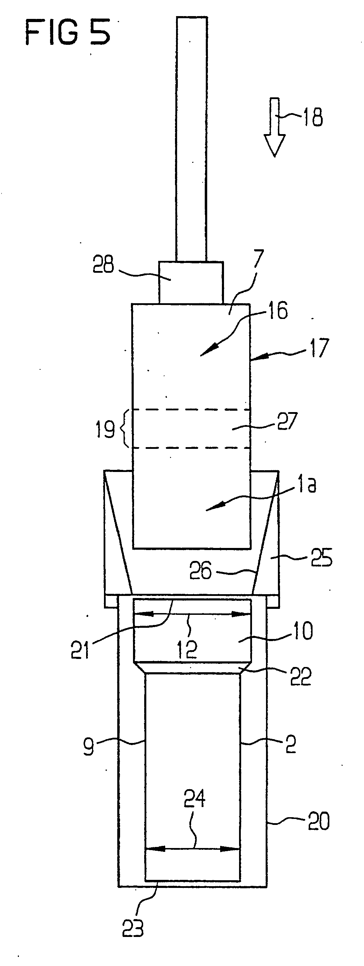

Zur Herstellung beispielsweise des in Fig.1 dargestellten Abgaskatalysators wird ein aus zwei Monolithen 1a, 1 b und einer einlagig darum gewickelten Lagerungsmatte 7 bestehendes Monolithpaket 17 in Einpreßrichtung 18 in einen Rohrabschnitt 2 eingepreßt. Der Rohrabschnitt 2 liegt zur Halterung in einer Rohraufnahme 20 ein. Der Längsabschnitt 10 mit seiner größeren Innenquerschnittsfläche bzw. seinem größeren Durchmesser 12 erstreckt sich bis zu dem gegen die Einpreßrichtung 18 weisenden Rohrende 21 des Rohrabschnittes 2. Der Längsabschnitt 10 geht mit einer Stufe bzw. einer Schrägschulter 22 in den verengten Längsabschnitt 9 über. Der Längsabschnitt 9 erstreckt sich bis zu dem anderen Rohrende 23 des Rohrabschnittes 2. Der Unterschied zwischen dem Durchmesser 12 des verengten Längsabschnittes 9 und dem Durchmesser 24 des nicht verengten Längsabschnittes 10 beträgt nur einige Zehntel Millimeter. In den Darstellungen gern. Fig.1-Fig.**9** sind diese Unterschiede zur Verdeutlichung und auch aus zeichnerischen Gründen übertrieben dargestellt. Zur Erleichterung der Einführung des Monolithpaketes 17 in den Rohrabschnitt 2 ist auf das obere Stirnende der Rohraufnahme 20 ein Einführtrichter 25 aufgesetzt. Die Einführschräge 26 des Einführtrichters 25 erstreckt sich im wesentlichen bis zum Rohrende 21 des Rohrabschnittes 2. Der Abstand 19 zwischen den beiden Monolithen 1a, 1 b, wird durch einen etwa ringförmigen Abstandshalter 27, beispielsweise aus Eis oder Trockeneis, gewährleistet. Das Monolithpaket 17 wird durch einen in Einpreßrichtung 18 vorgetriebenen Preßstempel 28 in den Rohrabschnitt 2 eingeschoben.

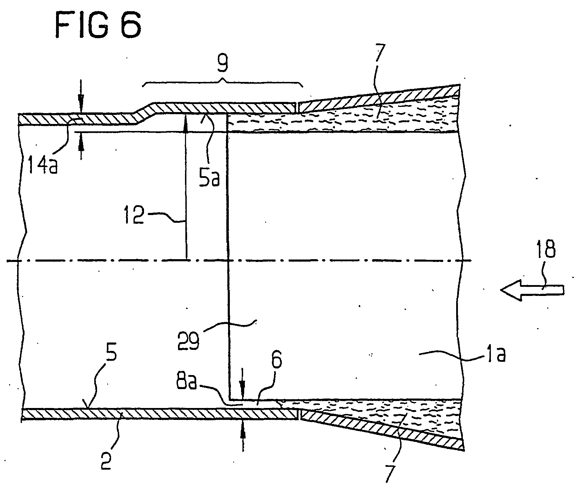

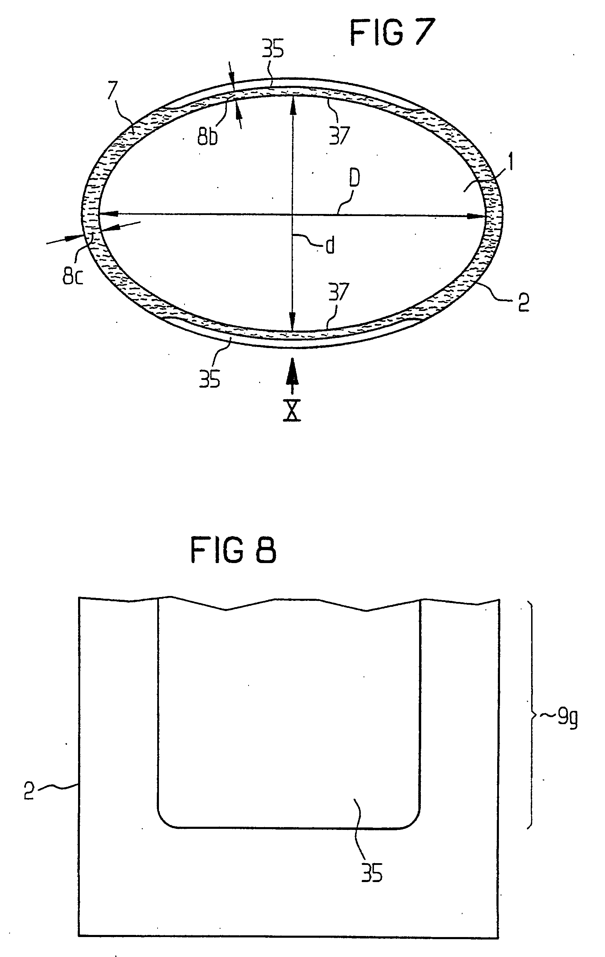

In Fig.**6** ist das Rohrende 21 des Rohrabschnittes 2 mit teilweise darin eingeschobenem Monolithenpaket 17 zur Erläuterung der Anfangsphase des Einpreßvorgangs dargestellt. In der rechten Hälfte der Abbildung ist gezeigt, welche Probleme bei einem Spaltraum 6 mit einem relativ geringen Spaltmaß 8a autreten. In der Anfangsphase des Einpreßvorganges, bei dem das Monolithpaket 17 noch nicht oder nur geringfügig in den Rohrabschnitt 2 eintaucht, ist der Monolith 1 a nur relativ locker von der Lagerungsmatte 7 umgeben. Wenn ein enger Spaltraum 6 zwischen dem Monolithen 1a und der Innenfläche 5 des Rohrabschnittes 2 vorhanden ist, wird der Lagerungsmatte 7 beim Eintritt in den Rohrabschnitt 2 ein so großer Widerstand entgegengesetzt, daß sie gegenüber dem in Einpreßrichtung 18 vorgetriebenen Monolithen 1 a zurückbleibt und schließlich nur dieser in den Rohrabschnitt 2 eingeschoben wird. Wenn jedoch, wie dies in der linken Hälfte von Fig.7 dargestellt ist, der sich an das Rohrende 21 anschließende Längsabschnitt 10 eine größere Innenquerschnittsfläche bzw. eine größere lichte Weite 12 aufweist, wird die Lagerungsmatte 7 dementsprechend geringer komprimiert. Dementsprechend geringer ist auch der Reibungswiderstand zwischen der Innenseite 5a des Längsabschnittes 10 und der Lagerungsmatte 7. Die endgültige Kompression der Lagerungsmatte 7 erfolgt erst dann, wenn schon ein der Länge des Abschnittes 10 entsprechender Bereich des Monolithpakets in den Rohrabschnitt 2 eingeführt ist. Die Lagerungsmatte 7 ist dann in diesem Bereich derart festgeklemmt bzw. stabilisiert, daß beim Übergang in den verengten Spalt mit seinem kleineren Spaltmaß 8a ein Zurückschieben der Lagerungsmatte, wie in Fig.6 rechts dargestellt, praktisch ausgeschlossen ist.

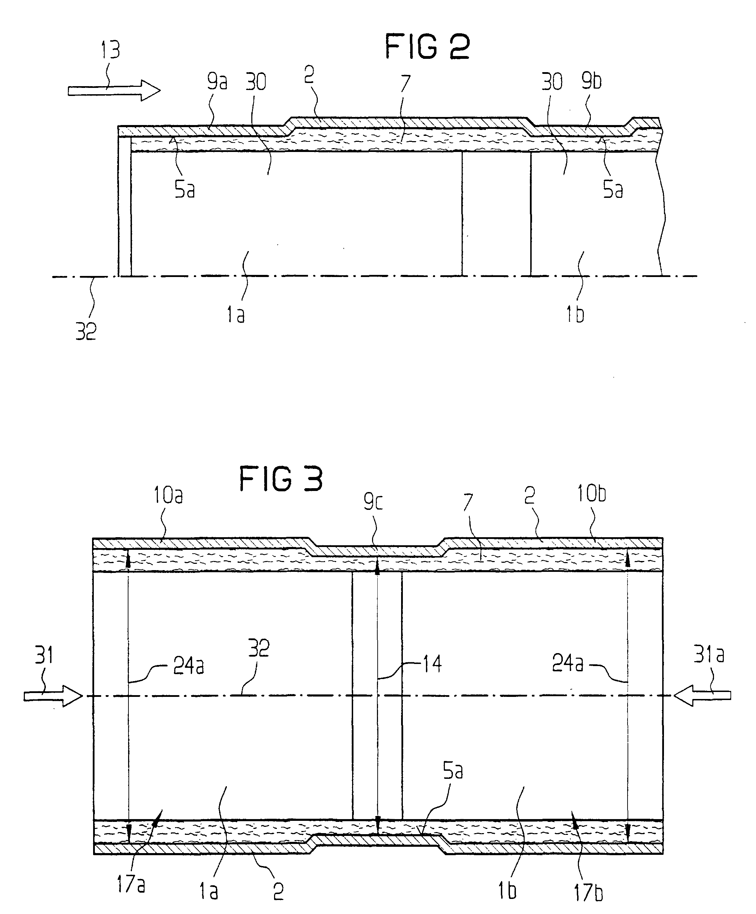

In Fig.2**-4** und **7-9** sind der Einströmtrichter und der Ausströmtrichter aus Vereinfachungsgründen weggelassen worden. Fig.2 zeigt einen Rohrabschnitt 2 mit zwei Monolithen 1a und 1 b. Deren gegen die Strömungsrichtung 13 weisende Vorderbereiche 30 sind jeweils von einem verengten Längsabschnitt 9a, 9b umgeben. Dies kann dann zweckmäßig sein, wenn nicht nur der vordere Monolith 1a, sondern auch der in Strömungsrichtung 13 dahinter angeordnete Monolith 1 b besonders fest gelagert werden soll, etwa dann, wenn auch er noch mit einer starken Abgasströmung beaufschlagt ist. Bei dem in Fig.3 dargestellten Ausführungsbeispiel ist ein verengter Längsabschnitt 9c etwa in der Mitte des Rohrabschnittes 2 angeordnet und überdeckt die einander zu gewandten Stimseitenbereiche der Monolithe 1a und 1 b. Der verengte Längsabschnitt 9c ist von zwei Längsabschnitten 10a und 10b an flankiert, deren Innenquerschnittsfläche bzw. Durchmesser 24a größer ist als der Durchmesser 14 des Längsabschnittes 9c. Die den genannten Längsabschnitten zugeordneten Innenflächen 5a bilden im wesentlichen einen koaxial zur Mittellängsachse 32 des Rohrabschnitts 2 verlaufenden Zylindermantel. Zur Herstellung eines Abgaskatalysators unter Verwendung eines Rohrabschnittes gemäß Fig.3 wird zunächst ein erstes Monolithpaket 17a in Einschubrichtung 31 und danach oder gleichzeitig ein zweites Monolithpaket 17b in Einschubrichtung 31a in den Rohrabschnitt 2 eingeschoben.

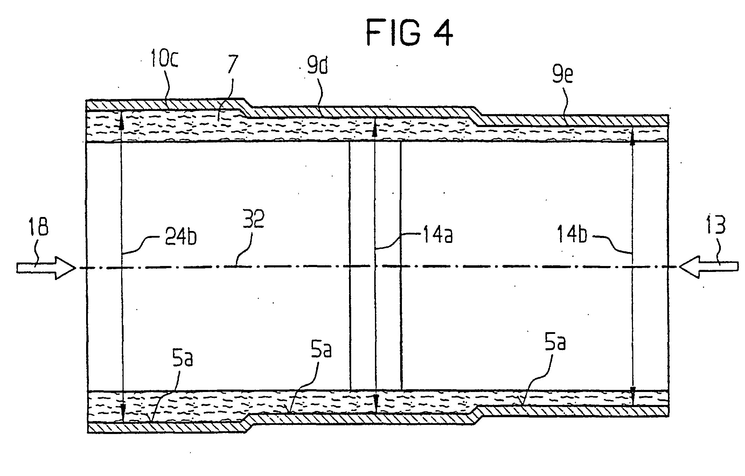

Bei dem in Fig.4 dargestellten Ausführungsbeispiel sind drei Längsabschnitte 10c, 9d und 9e in Einpreßrichtung 18 nach abnehmenden Innenquerschnittsflächen bzw. Durchmessern 24b, 14a, und 14b angeordnet. Die den jeweiligen Längsabschnitten zugeordnete Innenfläche 5a bildet auch hier im wesentlichen einen koaxial verlaufenden Zylindermantel.

Der erfindungsgemäße Gedanke eines stufenförmig verengten Spaltraumes kann prinzipiell auch bei Abgaskatalysatoren mit Halbschalen- oder Wickelgehäusen Verwendung finden. Im ersten Fall werden dazu Gehäusehalbschalen verwendet, die wenigstens zwei Längsabschnitte aufweisen, wobei ein Längsabschnitt erfindungsgemäß verengt ist. Bei einem Wickelgehäuse wird ein Blechzuschnitt mit wenigstens zwei Längsabschnitten verwendet, wobei der eine Längsabschnitt erhaben aus der Planebene des anderen Längsabschnittes hervorsteht. Der erhaben vorstehende Längsabschnitt bildet dann beim fertigen Abgaskatalysator einen verengten Längsabschnitt des einen Monolithen aufnehmenden Gehäusebereiches.

Fig. **7** und **8** zeig**en** einen Rohrabschnitt 2 mit ovaler bzw. elilipsoider Umrißform. Er weist einen Längsabschnitt 9g auf, der sich nur über zwei sich in Richtung der kleinen Ellipsenachse d gegenüberliegende Umfangstellbereiche 35 erstreckt. Diese Teilbereiche sind etwa in Richtung auf die Mitte des Monolithen 1 zu abgesenkt. Dadurch entsteht im Bereich der Flachseiten 37 des Monolithen ein Spaltraum 6mit verringertem Spaltmaß 8b. Die Flächenpressung der Lagerungsmatte 7 ist daher in diesem Bereich erhöht. Dementsprechend erhöht ist die radiale Preßkraft auf den Monolithen 1. Dagegen sind die stärker gekrümmten Oberflächenbereiche des Monolithen 1 im Bereich seiner großen Ellipsenachse D aufgrund des dort geringeren Spaltmaßes 8c mit einer geringeren radialen Preßkraft beaufschlagt. In Fig.**8** ist verdeutlicht, daß sich der Längsabschnitt 9g mit seinen abgesenkten Umfangsteilbereichen 35 nur über eine Teillänge des Rohrabschnittes 2 erstreckt.

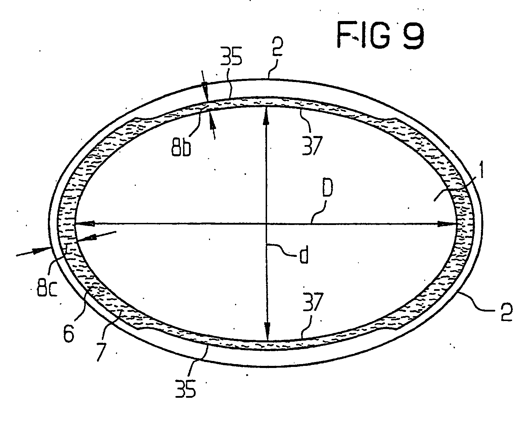

Bei dem in Fig.**9** dargestellten Rohrabschnitt ist ein verengter Längsabschnitt vollumfänglich ausgebildet. Im Bereich der Flachseiten 37 des Monolithen ist jedoch die Verengung der Innenquerschnittsfläche stärker ausgeprägt als in den seitlichen stärker gekrümmten Umfangsbereichen des Monolithen. Gegenüber der Querschnittsfläche des ursprünglichen bzw. nicht verengten Rohrabschnittes 2 ist somit im Bereich des verengten Längsabschnittes der Monolith von einem insgesamt verengten Spaltraum 6 umgeben. Aufgrund der genannen Ausgestaltung ist aber das Spaltmaß 8b im Bereich der Flachseiten geringer als das Spaltmaß 8 c im seitlichen stärker gekrümmten Umfangsbereich des Monolithen 1.

### Bezugszeichenliste

- 1: Monolith
- 2: Rohrabschnitt
- 3a: Einströmtrichter
- 3b: Ausströmtrichter
- 4: Gehäuse
- 5: Innenfläche
- 6: Spaltraum
- 7: Lagerungsmatte
- 8: Spaltmaß
- 9: Längsabschnitt
- 10: Längsabschnitt
- 11: Lagerungsbereich
- 12: Durchmesser
- 13: Strömungsrichtung
- 14: Durchmesser
- 15: Umfangsfläche
- 16: Stirnkantenbereich
- 17: Monolithpaket
- 18: Einpreßrichtung
- 19: Abstand
- 20: Rohraufnahme
- 21: Rohrende
- 22: Schrägschulter
- 23: Rohrende
- 24: Durchmesser
- 25: Einführtrichter
- 26: Einführschräge
- 27: Abstandshalter
- 28: Preßstempel
- 29: Vorderbereich
- 30: Vorderbereich
- 31: Einschubrichtung
- 32: Mittellängsachse
- 33: Längsabschnitt
- 34: Längsabschnitt
- 35: Umfangsteilbereich
- 36: Längsabschnitt
- 37: Flachseite

- d: kleine Ellipsenachse
- D: große Ellipsenachse

## Patentansprüche

1. Verfahren zur Herstellung eines Abgaskatalysators, insbesondere für Kraftfahrzeuge, bei dem ein aus wenigstens einem von einer Lagerungsmatte (7) umwickelten Monolithen (1) gebildetes Monolithpaket (17) in einen als Gehäuse dienenden Rohrabschnitt (2) eingepresst wird, wobei der Rohrabschnitt (2) mehrere unterschiedlich große Innenquerschnittsflächen aufweist und das Monolithpaket (17) von einem Rohrende (21) mit einer größeren oder mit der größten Innenquerschnittsfläche her eingepresst wird, **gekennzeichnet durch** die Verwendung eines Rohrabschnittes (2) mit einer sich stufenartig verändernden Innenquerschnittsfläche in Form mehrerer Längsabschnitte (9, 10), wobei die Innenfläche (5a) der Längsabschnitte parallel zur Mittellängsachse (32) des Rohrabschnitts verläuft.

2. Verfahren nach Anspruch 1, **dadurch gekennzeichnet, dass** von jedem Rohrende des Rohrabschnittes (2) her ein Monolithpaket eingepresst wird.

3. Verfahren nach Anspruch 1, **gekennzeichnet durch** die Verwendung eines Rohrabschnittes (2), bei dem in Einpressrichtung (18) aufeinanderfolgende Längsabschnitte (10c, 9d, 9e) nach abnehmender Innenquerschnittsfläche angeordnet sind.

4. Verfahren nach Anspruch 1 oder 2, gekennzeichnet t durch die Verwendung eines Rohrabschnitts (2), bei dem sich von den Rohrenden jeweils ein Längsabschnitt (10a, 10b) mit der größten Innenquerschnittsfläche wegerstreckt, wobei diese Längsabschnitte (10a, 10b) wenigstens einen Längsabschnitt (9c) mit kleinerer Innenquerschnittsfläche zwischen sich einschließen.

5. Verfahren nach einem der Ansprüche 1-4, **gekennzeichnet durch**
die Verwendung eines Rohrabschnittes (2), bei dem sich die verengten Längsabschnitte nur über einen Teilumfangsbereich erstrecken.

6. Verfahren nach einem der Ansprüche 1-5, **gekennzeichnet durch** die Verwendung eines Rohrabschnittes (2), bei dem die Verengung eines bestimmten Längsabschnittes in einem Umfangsbereich stärker ausgeprägt ist als in einem anderen Umfangsbereich.

7. Verfahren nach einem der Ansprüche 1-6, **dadurch gekennzeichnet, dass** die Innenquerschnittsfläche der verengten Längsabschnitte so gewählt ist, dass eine durch Gehäuse-, Monolith- und/oder Mattentoleranzen bedingte Verringerung der auf den Monolithen ausgeübten radialen Presskraft zumindest kompensiert wird.

8. Verfahren nach einem der Ansprüche 1-7, **dadurch gekennzeichnet, dass** als Lagerungsmatte eine Mineralfasermatte mit darin eingelagerten Blähglimmerpartikeln verwendet wird.

9. Abgaskatalysator insbesondere für Kraftfahrzeuge, zur Verwendung in einem Verfahren nach einem der Ansprüche 1 bis 8, mit einem in wesentlichen aus einem etwa zylindrischen Rohrabschnitt (2), einem Einströmtrichter (3) und einem Ausströmtrichter (3b) bestehenden Gehäuse (4), wenigstens einem im Rohrabschnitt (2) angeordneten etwa zylindrischen Monolithen (1), und einem zwischen der Umfangsfläche (15) des Monolithen (1) und der Innenfläche (5) des Gehäuses (4) vorhandenen, eine Lagerungsmatte (7) mit radialer Vorspannung aufnehmenden Spaltraum (6), **dadurch gekennzeichnet, dass** der Rohrabschnitt eine sich stufenartig verändernde Innenquerschnittsfläche in Form mehrerer Längsabschnitte (9, 10) aufweist, wobei die Innenfläche (5a) der Längsabschnitte (9, 10) parallel zur Mittellängsachse (32) des Rohrabschnittes verläuft.

10. Abgaskatalysator nach Anspruch 9, **dadurch gekennzeichnet, dass** ein verengter Längsabschnitt (9) den zum Einströmtrichter (3) weisenden Vorderbereich des Monolithen (1) umfasst.

11. Abgaskatalysator nach Anspruch 10, **gekennzeichnet durch** mehrere Monolithe (la, 1 b), wobei jeweils der dem Einströmtrichter (3) zugewandte Vorderbereich der Monolithe (la, 1 b) von einem verengten Längsabschnitt (9a,9b) des Gehäuses (4) umgeben ist.

12. Abgaskatalysator nach einem der Ansprüche 9-11, **gekennzeichnet durch** einen Rohrabschnitt (2), bei dem in Strömungsrichtung (13) oder in Einpressrichtung (18) aufeinanderfolgende Längsabschnitte (10c, 9d, 9e) nach abnehmender Innenquerschnittsfläche angeordnet sind.

13. Abgaskatalysator nach einem der Ansprüche 9-11, **gekennzeichnet durch** einen Rohrabschnitt (2) mit jeweils einem sich von den Rohrenden (21,23) wegerstreckenden Längsabschnitt (10a, 10b) mit der größten Innenquerschnittsfläche, wobei diese Längsabschnitte (1 10a 10b) wenigstens einen Längsabschnitt (9c) mit kleinerer Innenquerschnittsfläche zwischen sich einschließen.

14. Abgaskatalysator nach einem der Ansprüche 9-13, **dadurch gekennzeichnet, dass** sich die verengten Längsabschnitte nur über einen Teilumfangsbereich des Rohrabschnittes (2) erstrecken.

15. Abgaskatalysator nach einem der Ansprüche 9-14,
**dadurch gekennzeichnet, dass** die Verengung wenigstens eines verengten Längsabschnittes in einem Teilumfangsbereich stärker ausgeprägt ist als in einem anderen Teilumfangsbereich.

16. Abgaskatalysator nach einem der Ansprüche 9-15, **dadurch gekennzeichnet, dass** die Lagerungsmatte (7) eine Mineralfasermatte ist.

17. Abgaskatalysator nach einem der Ansprüche 9-16, **dadurch gekennzeichnet, dass** die Lagerungsmatte eine Mineralfasermatte mit eingelagerten Blähglimmerpartikeln ist.

## Claims

1. Method of manufacturing an exhaust gas catalyser, in particular for motor vehicles, in which a monolith pack (17), which is formed from at least one monolith (1) wound from a stratification mat (7), is pressed into a pipe section (2) acting as a casing, the pipe section (2) having a plurality of internal cross-sectional areas of different sizes and the monolith pack (17) being pressed in from a pipe end (21) with a larger or with the largest internal cross-sectional area, **characterized by** the use of a pipe section (2) with an internal cross-sectional area changing in steps in the form of a plurality of longitudinal sections (9, 10), the internal surface (5a) of the longitudinal sections extending parallel to the central longitudinal axis (32) of the pipe section.

2. Method according to Claim 1, **characterized in that** a monolith pack is pressed in from each pipe end of the pipe section (2).

3. Method according to Claim 1, **characterized by** the use of a pipe section (2) in which longitudinal sections (10c, 9d, 9e) following one another in the insertion direction (18) are arranged in accordance with decreasing internal cross-sectional area.

4. Method according to Claim 1 or 2, **characterized by** the use of a pipe section (2) in which a longitudinal section (10a, 10b) with the largest internal cross-sectional area extends away from each pipe end, these longitudinal sections (10a, 10b) enclosing between them at least one longitudinal section (9c) with a smaller internal cross-sectional area.

5. Method according to one of Claims 1 to 4, **characterized by** the use of a pipe section (2) in which the constricted longitudinal sections only extend over a partial peripheral region.

6. Method according to one of Claims 1 to 5, **characterized by** the use of a pipe section (2) in which the constriction of a certain longitudinal section is more strongly marked in one peripheral region than in another peripheral region.

7. Method according to one of Claims 1 to 6, **characterized in that** the internal cross-sectional area of the constricted longitudinal sections is selected in such a way that compensation, at least, is provided for a reduction, caused by casing tolerances, monolith tolerances and/or mat tolerances, in the radial pressure force exerted on the monoliths.

8. Method according to one of Claims 1 to 7, **characterized in that** a mineral fibre mat with interpolated expanded mica particles is used as the stratification mat.

9. Exhaust gas catalyser, in particular for motor vehicles, for use in a method according to one of Claims 1 to 8, having a casing (4) consisting essentially of an approximately cylindrical pipe section (2), an inlet flow funnel (3) and an outlet flow funnel (3b), at least one approximately cylindrical monolith (1) arranged in the pipe section (2), and a gap space (6) which is present between the peripheral surface (15) of the monolith (1) and the inner surface (5) of the casing (4) and which accepts the stratification mat (7) with radial prestress, **characterized in that** the pipe section has an internal cross-sectional area changing in steps in the form of a plurality of longitudinal sections (9, 10), the internal surface (5a) of the longitudinal sections (9, 10) extending parallel to the central longitudinal axis (32) of the pipe section.

10. Exhaust gas catalyser according to Claim 9, **characterized in that** a constricted longitudinal section (9) comprises the front region of the monolith (1), pointing towards the inlet flow funnel (3).

11. Exhaust gas catalyser according to Claim 10, **characterized by** a plurality of monoliths (1a, 1b), each front region of the monoliths (1a, 1b) facing towards the inlet flow funnel (3) being surrounded by a constricted longitudinal section (9a, 9b) of the casing (4).

12. Exhaust gas catalyser according to one of Claims 9 to 11, **characterized by** a pipe section (2) in which longitudinal sections (10c, 9d, 9e), which follow one another in the flow direction (13) or in the insertion direction (18), are arranged in accordance with decreasing internal cross-sectional area.

13. Exhaust gas catalyser according to one of Claims 9 to 11, **characterized by** a pipe section (2) with a longitudinal section (10a, 10b) with the largest internal cross-sectional area extending away from each pipe end (21, 23), these longitudinal sections (1 10a 10b) enclosing between them at least one longitudinal section (9c) with smaller internal cross-sectional area.

14. Exhaust gas catalyser according to one of Claims 9 to 13, **characterized in that** the constricted longitudinal sections only extend over a partial peripheral region of the pipe section (2).

15. Exhaust gas catalyser according to one of Claims 9 to 14, **characterized in that** the constriction of at least one constricted longitudinal section in one partial peripheral region is more strongly marked than in another partial peripheral region.

16. Exhaust gas catalyser according to one of Claims 9 to 15, **characterized in that** the stratification mat (7) is a mineral fibre mat.

17. Exhaust gas catalyser according to one of Claims 9 to 16, **characterized in that** the stratification mat is a mineral fibre mat with interpolated expanded mica particles.

## Revendications

1. Procédé de fabrication d'un pot catalytique pour des gaz d'échappement, notamment pour des véhicules automobiles, qui consiste à pousser un paquet (27) de monolithe formé d'au moins un monolithe (1) entouré d'une nappe (7) de mise en position dans un tronçon (2) de tube servant de boîtier, le tronçon (2) de tube ayant plusieurs surfaces de section transversale intérieure de dimensions différentes et le paquet (17) de monolithe étant introduit par une extrémité (21) du tube ayant une surface de section transversale intérieure assez grande ou la plus grande, **caractérisé par** l'utilisation d'un tronçon (2) de tube ayant une surface de section transversale intérieure se modifiant par palier sous la forme de plusieurs tronçons (9, 10) longitudinaux, la surface (5a) intérieure des tronçons longitudinaux s'étendant parallèlement à l'axe (32) longitudinal médian du tronçon de tube.

2. Procédé suivant la revendication 1, **caractérisé en ce qu'**un paquet de monolithe est introduit par chaque extrémité du tronçon (2) de tube.

3. Procédé suivant la revendication 1, **caractérisé par** l'utilisation d'un tronçon (2) de tube, dans lequel des sections (10c, 9d, 9e) longitudinales qui se succèdent dans la direction (18) d'introduction sont disposées suivant des surfaces de section transversale intérieure qui décroissent.

4. Procédé suivant la revendication 1 ou 2, **caractérisé par** l'utilisation d'un tronçon (2) de tube, dans lequel un tronçon (10a, 10b) longitudinal, ayant la surface de section transversale intérieure la plus grande est éloigné des extrémités du tube, ces tronçons (10a, 10b) longitudinaux incluant entre eux au moins un tronçon (9c) longitudinal de surface de section transversale intérieure plus petite.

5. Procédé suivant l'une des revendications 1 à 4, **caractérisé par** l'utilisation d'un tronçon (2) de tube, dans lequel les tronçons longitudinaux rétrécis ne s'étendent que sur une partie du pourtour.

6. Procédé suivant l'une des revendications 1 à 5, **caractérisé par** l'utilisation d'un tronçon (2) de tube, dans lequel le rétrécissement d'un tronçon longitudinal déterminé est nettement plus marqué dans une partie du pourtour que dans une autre partie du pourtour.

7. Procédé suivant l'une des revendications 1 à 6, **caractérisé en ce que** la surface de section transversale intérieure des tronçons longitudinaux rétrécis est choisie de manière à compenser au moins une diminution, provoquée par les tolérances du boîtier du monolithe et/ou de la nappe, de la force de poussée radiale appliquée sur le monolithe.

8. Procédé suivant l'une des revendications 1 à 7, **caractérisé en ce qu'**il consiste à utiliser comme nappe de mise en position une nappe de fibres minérales dans laquelle sont incorporées des particules de mica expansé.

9. Pot catalytique pour des gaz d'échappement, notamment pour des véhicules automobiles, destiné à être utilisé dans un procédé suivant l'une des revendications 1 à 8, comprenant une enveloppe (4) constituée essentiellement d'un tronçon (2) de tube à peu près cylindrique, d'un entonnoir (3) d'entrée et d'un entonnoir (3b) de sortie, d'au moins un monolithe (1) à peu près cylindrique disposé dans le tronçon (2) de tube, et d'un espace (6) en forme de fente compris entre la face (15) périphérique du monolithe (1) et la face (5) intérieure de l'enveloppe (4) et recevant une nappe (7) de mise en position avec précontrainte radiale, **caractérisé en ce que** le tronçon de tube a une surface de section transversale intérieure se modifiant par palier sous la forme de plusieurs tronçons (9, 10) longitudinaux, la surface (5) intérieure des tronçons (9, 10) longitudinaux s'étendant parallèlement à l'axe (32) longitudinal médian du tronçon de tube.

10. Pot catalytique pour des gaz d'échappement suivant la revendication 9, **caractérisé en ce qu'**un tronçon (9) longitudinal rétréci entoure la partie avant du monolithe (1) tournée vers l'entonnoir (3) d'entrée.

11. Pot catalytique pour des gaz d'échappement suivant la revendication 10, **caractérisé par** plusieurs monolithes (1a, 1b), la partie avant, tournée vers l'entonnoir (3) d'entrée, des monolithes (1a, 1b) étant entourée respectivement d'un tronçon (9a, 9b) longitudinal rétréci de l'enveloppe (4).

12. Pot catalytique pour des gaz d'échappement suivant l'une des revendications 9 à 11, **caractérisé par** un tronçon (2) de tube, dans lequel des tronçons (10c, 9d, 9e) longitudinaux se succédant dans la direction (13) du courant ou dans la direction (18) d'introduction sont disposés suivant des surfaces de section transversale intérieure qui décroissent.

13. Pot catalytique pour des gaz d'échappement suivant l'une des revendications 9 à 11, **caractérisé par** un tronçon (2) de tube, dans lequel un tronçon (10a, 10b) longitudinal ayant la surface de section transversale intérieure la plus grande est éloigné des extrémités du tube, ces tronçons (10a, 10b) longitudinaux incluant entre eux au moins un tronçon (9c) longitudinal de surface de section transversale intérieure plus petite.

14. Pot catalytique pour des gaz d'échappement suivant l'une des revendications 9 à 13, **caractérisé en ce que** les tronçons longitudinaux rétrécis ne s'étendent que sur une partie du tronçon (2) de tube.

15. Pot catalytique pour des gaz d'échappement suivant l'une des revendications 9 à 14, **caractérisé en ce que** le rétrécissement d'au moins un tronçon rétréci est plus marqué dans une partie du pourtour que dans une autre partie du pourtour.

16. Pot catalytique pour des gaz d'échappement suivant l'une des revendications 9 à 16, **caractérisé en ce que** la nappe de mise en position est une nappe de fibres minérales dans laquelle sont incorporées des particules de mica expansé.

17. Pot catalytique pour des gaz d'échappement suivant l'une des revendications 9 à 16, **caractérisé en ce que** la nappe de mise en position est une nappe de fibres minérales dans laquelle sont incorporées des particules de mica expansé.
